# EUROPEAN PATENT APPLICATION

(11) **EP 3 409 845 A1**
(43) Date of publication of application: **05.12.2018**
(21) Application number: 17173167.2
(22) Date of filing: 29.05.2017
(51) Int. Cl.: E02F 9/20, F16H 7/02, F16H 29/12, E02F 9/22

(54) **A WORKING MACHINE AND A METHOD FOR OPERATING A HYDRAULIC PUMP IN A WORKING MACHINE**

(71) Applicant: Volvo Construction Equipment AB, 631 85 Eskilstuna (SE)
(72) Inventor: Unnebäck, Joakim, 633 46 Eskilstuna (SE); Andersson, Thomas, 632 39 Eskilstuna (SE)
(74) Representative: Volvo Technology Corporation

(57) **Abstract**

The invention relates to a working machine (1) comprising: a power take-off arrangement (3); an engine (5) and an electric motor (7); a hydraulic pump (9); a plurality of hydraulic driven movable members (20, 22, 24, 26, 28); and a hydraulic system (11) driven by the hydraulic pump. The hydraulic system is configured to power at least one of the hydraulic driven movable members. The engine and the electric motor is coupled to the power take-off arrangement in order to drive the hydraulic pump.

## Description

### TECHNICAL FIELD

The present invention relates to working machine comprising a power take-off arrangement, an engine and an electric motor. The present invention also relates to a method for operating a hydraulic pump in such working machine.

The invention is applicable on working machines within the fields of industrial construction machines or construction equipment, in particular excavators, e.g. a tracked swilling excavator comprising either a caterpillar track (i.e. crawlers) or wheels, and a cantilever member coupled to a rotating platform mounted on the caterpillar track. Although the invention will be described with respect to an excavator, the invention is not restricted to this particular machine, but may also be used in other working machines such as articulated haulers, wheel loaders, shovels, drillers, backhoe loaders or any other working machine.

### BACKGROUND

Construction machines, such as e.g. excavators is well known to those skilled in the art. An excavator refers to a heavy construction equipment comprising e.g. a boom, an arm or a stick, a bucket, a cab and the like, on a rotating platform. The excavators are designed to operate in varied environments, such as wide chambers, digging of trenches, holes, foundations, farming, landscaping, mining, demotion and the like.

The excavators have to be effective and efficient with the work attachments, as well as the transmission parts to operate in varied environments. Further, the excavators have to distribute the power for both propulsion means and operational purposes. Often, the power is transmitted to the needed parts of the excavator by means of a hydraulic system powered by a hydraulic pump. The hydraulic pump may be operated by e.g. the electric motor of the working machine. An example of an excavator having an hydraulic system can be found in EP2772590.

Moreover, at least some working machines comprises both an engine and an electric motor in order to power both the propulsion means and for the other operational purposes. However, none of the presently available working machines provides a compact and automatic but yet simple system for operating the excavator. There is thus a need in the industry for further improvements of the working machines.

### SUMMARY

In view of the above-mentioned and other drawbacks of the prior art, the object of the present inventive concept is to provide a working machine having an engine, an electric motor and a PTO arrangement coupled to a hydraulic pump as well as to the engine and the electric motor, and to a method for operating a hydraulic pump in such working machine.

According to a first aspect of the invention, the object is achieved by a working machine according to claim 1. More specifically, the invention relates to a working machine comprising:
a power take-off arrangement (3); an engine (5) and an electric motor (7); a hydraulic pump (9); a plurality of hydraulic driven movable members; a hydraulic system (11) driven by said hydraulic pump, said hydraulic system being configured to power at least one of said hydraulic driven movable members (20, 22, 24, 26, 28); wherein said engine and said electric motor is coupled to said power take-off arrangement in order to drive said hydraulic pump.

By the provision of a working machine wherein said engine and said electric motor is coupled to said power take-off arrangement in order to drive said hydraulic pump, the working machine can be made more compact, or at least the added functionality of having both an engine and an electric motor coupled to the same power take-off arrangement, can be fitted into the existing engine compartment and an increase in size of the working machine, or compartment for motors and pump, can be avoided. It should be noted that the term "power take-off arrangement" can be abbreviated "PTO arrangement" and that the term "power take-off" generally is abbreviated as PTO. Thus the terms "power take-off arrangement" and "PTO arrangement" are used interchangeable throughout the application text.

The electric motor is according to one example embodiment connected to, and power by, the external grid. Alternatively, or additionally, the motor is connected to, and powered by, a battery comprised in the working machine and/or a generator driven by the engine. The engine may e.g. be an internal combustion engine powered by diesel or gasoline and/or another fuel such as e.g. biofuel.

It should be understood that the PTO arrangement can be driven by the engine and/or the electric motor, in order to drive the hydraulic pump. In other words, the engine and the electric motor is configured to drive or power the same PTO arrangement, and that PTO arrangement is configured to drive or power the hydraulic pump. According to one embodiment

According to one embodiment, the PTO arrangement is at least partly arranged between the engine and the electric motor. That is, the PTO arrangement is at least partly physically located between the engine and the electric motor. Hereby, both the engine and the electric motor can easily be coupled to the PTO arrangement. According to one embodiment, the engine and the electric motor is coupled to the PTO arrangement on opposite sides. That is, the engine is coupled to the PTO arrangement on a first side, and the electric motor is coupled to the PTO arrangement on a second side, said second side being opposite to said first side. Said first and second sides may e.g. be longitudinal sides of the PTO arrangement.

According to one embodiment, the working machine comprises more than one hydraulic pump connected to said PTO arrangement. Thus said hydraulic pump may be at least one hydraulic pump, or e.g. at least two hydraulic pumps. Thus, more than one hydraulic pump may provide pressurized fluid to the hydraulic system. According to one embodiment, the working machine comprises more than hydraulic system, or said hydraulic system is divided into branches, operating e.g. different hydraulic driven movable members. For such embodiments comprising more than one hydraulic systems, different hydraulic pumps may be configured to pressurize fluid in the different hydraulic systems.

It should be noted that the term "coupled" here means connected, mechanically connected or mechanically coupled in order to transfer motion from one part or portion to another part or portion. For example, by stating that the engine is coupled to the PTO arrangement, the engine is mechanically coupled, directly or indirectly via e.g. a gearing, to the PTO arrangement such that motion can be transferred from the engine to the PTO arrangement. Moreover, the term "motion" typically refers to as rotational motion, as the engine and electric motor typically transfers rotational motion to the PTO arrangement which in turn transfers rotational motion to the hydraulic pump. In other words, momentum, or torque, is transferred from the engine and the electric motor, respectively, to the PTO arrangement and further to the hydraulic pump. The hydraulic pump transfer the rotational motion, or momentum, in order to pressurize the fluid in the hydraulic system, which pressurized fluid drives or powers the hydraulic driven movable members.

According to one embodiment, said engine and said electric motor are coupled in parallel to said power take-off arrangement, and said power take of arrangement is coupled to, and thus driving, said hydraulic pump.

Hereby, both the engine and the electric motor can individually drive or power said hydraulic pump. If, for example, the operation of the engine fails, the electric motor may continue to drive the PTO arrangement and the hydraulic pump, regardless of the failure of the engine. Correspondingly, if the operation of the electric motor fails, the engine may continue to drive the PTO arrangement and the hydraulic pump, regardless of the failure of the electric motor. Thus, according to one embodiment the engine and the electric motor are individually sized such that each one of the engine and the electric motor is capable of operating the working machine on its own. Thus, the engine may drive the PTO arrangement and thereby the hydraulic pump. Correspondingly, the electric motor may drive the PTO arrangement and thereby the hydraulic pump.

According to one embodiment said engine comprises an engine output-shaft (50) configured to transfer motion from said engine to said power take-off arrangement, and said electric motor comprises a motor output-shaft (70) configured to transfer motion from said electric motor to said power take-off arrangement, wherein said engine output-shaft is arranged along a first axis (C1), and said motor output-shaft is arranged along second axis (C2), and wherein said first and second axis (C1, C2) are parallel to each other.

Hereby, a simple solution for transferring motion from the engine and the electric motor, respectively, to the PTO arrangement is provided. According to one embodiment, the engine output-shaft enters the PTO arrangement from said first side, and the motor output-shaft enters the PTO arrangement from said second side, being opposite to said first side. According to one embodiment, the engine output-shaft and the motor output-shaft are arranged along a common axis, and/or are directly coupled to the PTO arrangement or coupled to the PTO arrangement via an internal PTO shaft.

The engine output-shaft and the motor output-shaft may enter the PTO arrangement at different locations. Alternatively, a motor gearing arrangement is arranged between the electric motor and the PTO arrangement in order to compensate for the parallel offset of the axis. Alternatively or additionally, an engine gearing arrangement is arranged between the engine and the PTO arrangement in order to compensate for the parallel offset of the axis.

A gearing arrangement, such as the motor gearing arrangement or the engine gearing arrangement, is advantageous to use a the speed of the engine and/or the motor can be adapted to the optimal operation of the PTO arrangement, and the hydraulic pump. For example, the electric motor is typically operated with a higher speed compared to the engine, and a motor gearing arrangement can at least to some extent compensate for the difference in speed. Hereby, the cost of the electric motor can be kept low.

According to one embodiment, said power take-off arrangement comprises a PTO drive-wheel configured to receive motion from said engine and said electric motor.

Hereby, a relatively simple construction is provided which enables both the engine and the electric motor, such as e.g. the engine output-shaft and the motor output-shaft, to be coupled to the PTO arrangement. The PTO drive-wheel may e.g. at a first side be coupled to the engine via the engine output-shaft, and at a second side being opposite to the first side be coupled to the electric motor via the motor output-shaft. The PTO drive-wheel may subsequently transfer the motion to the hydraulic pump, possibly via other internal components in the PTO arrangement as will be described below.

I should be noted that the PTO drive-wheel may be divided into at least two drive-wheel portions, or even two parallel interconnected drive-wheel parts, wherein a first drive-wheel portion or part is coupled to the engine, and a second drive-wheel portion or part is coupled to the electric motor. However, such drive-wheel configurations are still referred to as a PTO drive-wheel, as it is motional coupled to both the engine and the electric motor.

For example, in at least some example modes of operation of the working machine, the engine may drive the PTO drive-wheel, and hence the hydraulic pump, while the electric motor is uncoupled to the PTO arrangement. Correspondingly, in at least some example modes of operation of the working machine, the electric motor may drive the PTO drive-wheel, and hence the hydraulic pump, while the engine is uncoupled to the PTO arrangement. According to one embodiment, or in at least some example modes of operation the engine and the electric motor commonly drives the PTO drive-wheel.

According to one embodiment, said power take-off arrangement comprises a PTO engine-shaft portion configured to transfer motion from said engine to said PTO drive-wheel, and a drive-wheel bearing arranged between said PTO engine-shaft portion and said PTO drive-wheel, wherein said drive-wheel bearing enables said PTO-drive wheel to operate as a free wheel.

In other words, the drive wheel bearing is configured as a free-wheel bearing enabling torque transfer in only one direction. Hereby, the PTO drive-wheel acts as a free-wheel at least in relation to the engine. Thus, as the speed of the engine, or rather the speed of the PTO engine-shaft portion, is higher compared to the speed of the electric motor, or rather the speed of the PTO motor-shaft portion, the engine contributes to, or even determines, the powering of the drive-wheel.

According to one embodiment, said drive-wheel bearing is a first drive-wheel bearing, and said power take-off arrangement comprises a PTO motor-shaft portion configured to transfer motion form said electric motor to said PTO drive-wheel, and a second drive-wheel bearing (32b) arranged between said PTO motor-shaft portion and said PTO drive-wheel, wherein said second drive-wheel bearing enables said PTO drive-wheel to operate as a free wheel.

In other words, the second drive wheel bearing is configured as a free-wheel bearing enabling torque transfer in only one direction. Hereby, the PTO drive-wheel acts as a free-wheel in relation to both the electric motor and the engine. Thus, the one of the PTO engine-shaft portion and PTO motor-shaft portion having the highest speed drives the PTO drive-wheel. Thus, both the engine and the electric motor can run at the same time, and the one of the engine and electric motor having the highest speed drive the hydraulic pump via the PTO arrangement. Thus, a simple, but yet effective, configuration is provided as an operational mode shift from the engine to the electric motor or vice versa can be carried out without the use of a clutch or a clutch control.

It should be noted that the PTO engine-shaft portion and PTO motor-shaft portion is arranged internally of the PTO drive-wheel, typically in a geometrical centre of the PTO drive-wheel. According to one embodiment the PTO engine-shaft portion is a portion of the engine output-shaft. According to one embodiment the PTO motor-shaft portion is a portion of the motor output-shaft. According to one embodiment, the PTO arrangement comprises at least one separate PTO shaft which comprises the PTO engine-shaft portion or the PTO motor-shaft portion. For such embodiments, the engine output-shaft or the motor output-shaft is coupled to the PTO shaft by a corresponding gearing arrangement.

According to one embodiment, said power take-off arrangement comprises a PTO output-shaft configured to transfer motion from said PTO drive-wheel to said hydraulic pump.

Thus, the PTO drive-wheel is mechanically coupled to the PTO output-shaft and thereby able to receive motion from the PTO drive-wheel (directly or indirectly via e.g. a PTO output wheel or some PTO intermediate wheel or gear) and to transfer that motion to said hydraulic pump. According to one embodiment, the PTO output-shaft is arranged along an output axis, while the PTO engine-shaft portion and the PTO motor-shaft portion are arranged along a common axis, which is parallel to said output axis. Thus, a parallel arrangement of the input shafts to the PTO arrangement (i.e. at least the PTO engine-shaft portion and the PTO motor-shaft portion) and the PTO output-shaft, is provided, which enables a compact design.

According to one embodiment, said power take-off arrangement comprises a PTO housing, housing said PTO drive-wheel, and said PTO output-shaft.

Thus, a separate, or individual PTO unit is provided which is at least partly is defined by the PTO housing. According to one embodiment, the engine and the electric motor is coupled to the same PTO unit. Hereby, and in combination with the engine and the electric motor being coupled in parallel with the PTO arrangement, a compact design is provided. According to one embodiment, the PTO housing further houses the PTO engine-shaft portion and the PTO motor-shaft portion.

According to one embodiment, said hydraulic drive movable member is chosen from the group of: a working machine propulsion means, a swing member, a boom, an arm, an equipment for handling objects.

Hereby, various hydraulic driven movable members may be driven by the engine and/or the electric motor. The hydraulic driven movable members may be operated by means of corresponding hydraulic actuator(s) in fluid connection with the hydraulic system. As mentioned previously, different hydraulic driven movable members may be in fluid connection with different hydraulic systems, which in turn may be pressurized by different hydraulic pumps, which in turn is driven by the same PTO arrangement, which in turn is driven by the engine and/or the electric motor.

According to one embodiment, said working machine is an excavator. Thus, the engine, electric motor and the PTO arrangement are especially adapted to be fitted into the excavator. Hereby, the excavator can be driven by the engine, for example by driving the propulsion means, such as e.g. crawlers, to move around to different working locations at the construction site without regards to the electric motor and any grid connection, while at a working location, the electric motor, now preferably connected to the grid can operate the working machine and the hydraulic pump.

According to a second aspect of the invention, the object is achieved by method for operating a hydraulic pump in a working machine according to claim 12. More specifically, the working machine comprises a power take-off arrangement, an engine and an electric motor, wherein an engine output-shaft and a motor output-shaft are coupled to said power take-off arrangement, said hydraulic pump being configured to pressurize a hydraulic system for powering at least one hydraulic driven movable member of said working machine. The method comprises the steps of:
driving said hydraulic pump by said power take-off arrangement;
operating said engine and said electric motor to alternately drive a PTO drive-wheel in said power-take off arrangement.

Effects and features of this second aspect of the present invention are largely analogous to those described above in connection with the first aspect of the inventive concept. Embodiments mentioned in relation to the first aspect of the present invention are largely compatible with the second aspect of the invention, of which some embodiments are explicitly mentioned in the following. In other words a working machine as described with any of the embodiments of the first aspect of the invention is applicable in the method described in relation to the second aspect of the invention.

According to one embodiment, the engine output-shaft is mechanically coupled to a PTO engine-shaft portion arranged within said PTO drive-wheel, and the motor output-shaft is mechanically coupled to a PTO motor-shaft portion arranged within said PTO drive-wheel, and wherein said power take-off arrangement further comprises first and second drive-wheel bearings arranged between said PTO engine-shaft portion and the PTO drive-wheel and arranged between said PTO motor-shaft portion and the PTO drive-wheel, respectively. According to one embodiment, the method comprises the further step of:
driving the PTO drive-wheel by the one of the PTO engine-shaft portion and PTO motor-shaft portion having the highest speed.

Thus, the first and second drive-wheel bearings are configured as free-wheel bearings enabling rotational motion to be transferred in only one direction, as previously described. According to one embodiment, the engine is driven at constant speed and/or the electric motor is driven at constant speed. Hereby, as the first and second drive-wheel bearings are configured as free-wheel bearings, the operation of the PTO arrangement, and any operational mode shift between the engine and the electric motor can be carried out in a simple manner.

According to one alternative embodiment, the method comprise the step of: adapting the rotational speed of the engine and/or the electric motor to the requirements of the hydraulic system.

Thus, energy can be saved as engine and/or electric motor are/is operated based on the need of the hydraulic pump. For example, a control unit receiving input data with the needs or requirements for the hydraulic driven movable members, can process this data and send an output signal to the engine and/or the electric motor to operate accordingly.

Further advantages and advantageous features of the invention are disclosed in the following description and in the dependent claims.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:

In the drawings:
Fig. 1 is a perspective view of a working machine comprising an engine, an electric motor, a PTO arrangement and a hydraulic pump according to an example embodiment of the present invention;
Fig. 2 shows a schematic overview of an engine, an electric motor, a PTO arrangement and a hydraulic pump according to an example embodiment of the present invention;
Fig. 3 shows a perspective view of an engine, an electric motor, a PTO arrangement and a hydraulic pump according to an example embodiment of the present invention;
Fig. 4 is a flow chart describing the steps of a method for operating a hydraulic pump in a working machine, according to one embodiment of the invention;

### DETAILED DESCRIPTION OF EXAMPLE EMBODIMENTS OF THE INVENTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

In the following, a working machine 1 is described. The inventive concept is applicable on any working machines within the fields of industrial construction machines or construction equipment, in particular excavators. Although the invention will be described with respect to an excavator, the invention is not restricted to this particular machine, but may also be used in other working machines such as haulers, e.g. articulated haulers, backhoe loaders and wheel loaders.

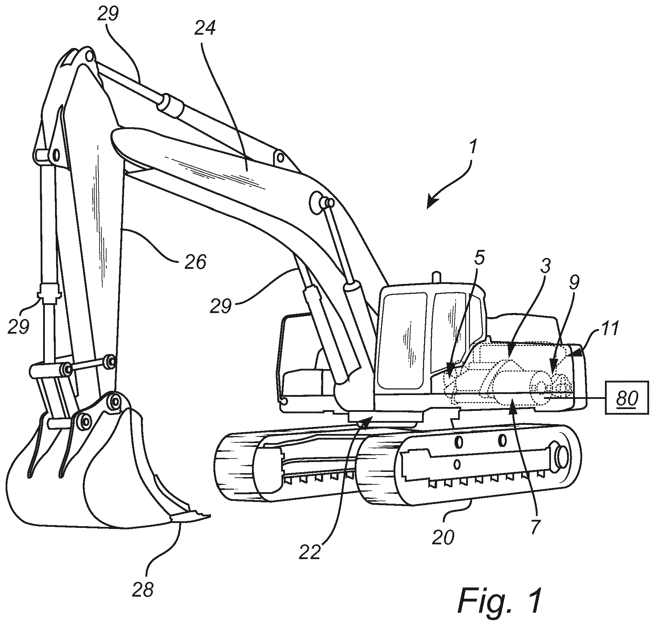

As seen in fig. 1 the working machine 1, or excavator 1, comprises an engine 5 and an electric motor 7, which provide energy to the excavator 1. The electric motor 7 may according to one example embodiment be connected to the external grid 80, and thus receive electrical energy from the external grid 80.

The excavator 1 of Fig. 1 further comprises a power take-off arrangement 3, hereafter abbreviated as a PTO arrangement 3, arranged between the engine 5 and the electric motor 7, and being configured to receive motion from the engine 5 and the electric motor 7. Thus, the engine 5 and the electric motor 7 are coupled to the PTO arrangement 3 in a parallel configuration. The excavator 1 further comprises a hydraulic pump 9 driven by the PTO arrangement 3, and comprises a hydraulic system 11 driven by the hydraulic pump 9. In other words, the engine 5 and the electric motor 7 is coupled to the same PTO arrangement 3 in order to drive the same hydraulic pump 9. It should be noted that the PTO arrangement 3 may drive more than one hydraulic pump.

Furthermore, the excavator 1 comprises a plurality of hydraulic driven movable members 20, 22, 24, 26, 28 which is driven and powered by the hydraulic pump 9 and the hydraulic system 11. In Fig. 1, the hydraulic driven movable members are exemplified as a propulsion means 20, here being the pair of crawlers 20, a swing member 22, here being the part of the excavator 1 comprising e.g. the cab, the engine 5, the motor 7 etc., a boom 24, here being the long reach boom 24 of the excavator 1, an arm 26, here being the dipper 24 of the excavator 1, and an equipment for handling objects 28, here being bucket 28. As seen in Fig. 1, at least some of the hydraulic driven movable members, such as the long reach boom 24, the dipper 26 and the bucket 28 are moved by means of hydraulic actuators 29. It should be noted that the examples of the hydraulic driven movable members in Fig. 1 is not limiting the invention in any way, but the hydraulic system 11 is rather configured to power at least one of the hydraulic driven movable members 20, 22, 24, 26, 28. For example, according to some embodiments, the propulsion means 20 may be driven by the engine 5 or motor 7 via a separate PTO arrangement (not shown), or be driven directly by a separate engine or motor (not shown). According to other examples of the invention, more or fewer hydraulic driven movable members may be driven by the PTO arrangement 3 and the hydraulic pump 9 depending on e.g. the type of working machine.

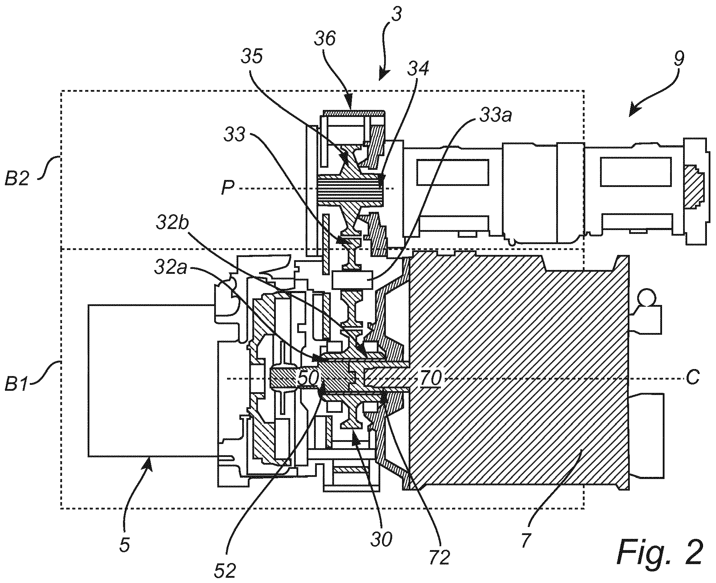

Turning to Fig. 2, being a cross sectional view of parts of the working machine 1 of Fig. 1. In the non-limiting example of Fig. 2, parts of the engine 5, the electric motor 7, the PTO arrangement 3, and the hydraulic pump 9 is shown. The engine 5 comprises an engine output-shaft 50 configured to transfer motion from the engine 5 to the PTO arrangement 3. Correspondingly the electric motor 7 comprises a motor output-shaft 70 configured to transfer motion from the electric motor 7 to the PTO arrangement 3. Moreover, the PTO arrangement 3 comprises a PTO drive-wheel 30 configured to receive motion from the engine 5 and the electric motor 7 via the engine output-shaft 50 and the motor output-shaft 70 respectively. Thus, the engine 5 is mechanically connected with the PTO arrangement 3 and the hydraulic pump 9. That is motion, and momentum or torque, from the engine 5 is transferred to the hydraulic pump 9 via the PTO arrangement 3. Correspondingly, in an at least partly parallel configuration to the engine 5, the electric motor 7 is mechanically connected with the PTO arrangement 3 and the hydraulic pump 9. That is motion, and momentum or torque, from the electric motor 7 is transferred to the hydraulic pump 9 via the PTO arrangement 3.

As seen in Fig. 2, at least a portion 52 of the engine output-shaft 50, which may be referred to as a PTO engine-shaft portion 52, and at least a portion 72 of the motor output-shaft 70, which may be referred to as a PTO motor-shaft portion 72, are arranged internally of the PTO drive-wheel 30. In other words, the PTO arrangement comprises the PTO engine-shaft portion 52 which is configured to transfer motion from the engine 5 to the PTO drive-wheel 30, and comprises the PTO motor-shaft portion 72 which is configured to transfer motion from the electric motor 7 to the PTO drive-wheel 30. Stated differently, the PTO-drive wheel houses, or encompasses, at least said portions 52, 72 of the respective engine output-shaft 50 and the motor output-shaft 70. Moreover, as seen in Fig. 2, the engine output-shaft 50 and the motor output-shaft 70 is arranged on a common axis C, and thus the PTO engine-shaft portion 52 and the PTO motor-shaft portion 72 are arranged on a common axis C.

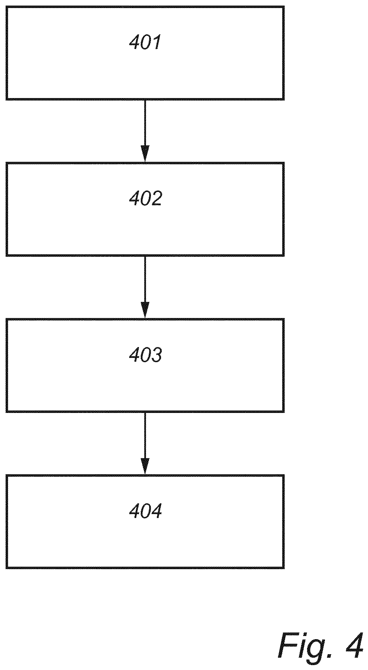

The PTO arrangement 3 comprises a first drive-wheel bearing 32a and a second drive-wheel bearing 32b. The first drive-wheel bearing 32a is arranged between the PTO engine-shaft portion 52 and the PTO drive-wheel 30, i.e. in Fig. 2 arranged between at least a portion of the engine output-shaft 50 and the PTO drive-wheel 30. Correspondingly, the second drive-wheel bearing 32b is arranged between the PTO motor-shaft portion 72 and the PTO drive-wheel 30, i.e. arranged between at least a portion of the motor output-shaft 70 and the PTO drive-wheel 30. Hereby, the PTO drive-wheel may function as a free wheel, and the shaft with the highest speed (e.g. highest RPM) of the PTO engine-shaft portion 52 and the PTO motor-shaft portion 72, drives the PTO drive-wheel 30. Thus, it should be understood that the first and second drive-wheel bearings 32a, 32b are configured as free-wheel bearings 32a, 32b, and thus enabling torque transfer in only one direction. This will be further elucidated later with reference to Fig. 4.

As seen in Fig. 2, the PTO arrangement further comprises a PTO output-shaft 34 configured to transfer motion from the PTO drive-wheel 30 to the hydraulic pump 9. Moreover, the PTO arrangement 3 may optionally further comprise an intermediate wheel 33 arranged between the PTO drive-wheel 30 and the PTO output-shaft 34. The intermediate wheel 33 is typically arranged around an intermediate shaft 33a, and may function as an idle shaft / idle wheel. The intermediate wheel 33 may be mechanically coupled to the PTO output-shaft 34 via an output wheel 35. Thus, motion may transferred within the PTO arrangement 3 from the PTO drive-wheel 30, further to the intermediate wheel 33, further to the output wheel 35, and further to the PTO output-shaft 34. The PTO output-shaft 34 is mechanically coupled to the hydraulic pump 9, and thus is arranged to transfer motion from the PTO arrangement 3 to the hydraulic pump 9 in order to drive the hydraulic pump 9. As seen in Fig. 2, the PTO output-shaft 34 is arranged along an output axis P, which is parallel to said common axis C. Thus, the engine output-shaft 50 and the motor output-shaft 70 is parallel arranged to the PTO output-shaft 34.

Moreover, the PTO arrangement 3 comprises a PTO housing 36 housing at least the PTO drive-wheel 30 and the PTO output-shaft 34. In Fig. 2, the PTO housing 36 further houses the PTO engine-shaft portion 52, the PTO motor-shaft portion 72, the intermediate wheel 33 as well as the output wheel 35. Thus, the PTO arrangement 3 in Fig. 2 may be described as a single or individual PTO unit defined in extension by the PTO housing 36.

The engine 5 and the electric motor 7 may be described as being arranged in a first block B1, and the hydraulic pump may be described as being arranged in a second block B2 being in close proximity, and parallel to, the first block B1. Moreover, the PTO arrangement 3 is arranged in both the first and second blocks B1, B2 such that at least the PTO drive-wheel is arranged in the first block B1, and at least the PTO output-shaft is arranged in the second block B2.

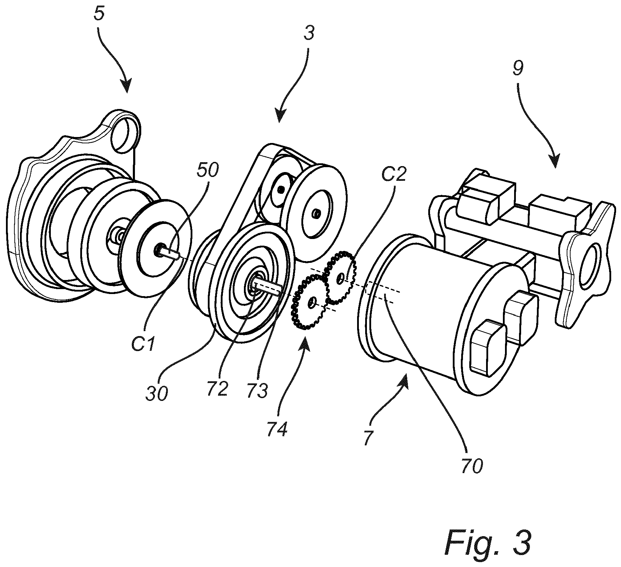

Fig. 3 shows an alternative embodiment of the parts described with reference to Fig. 2. The parts in Fig 3 is similar to, or the same as, the parts described in Fig. 2 why the same reference numerals are used for corresponding features and is not described in detail again for Fig. 2, but focus will now be drawn to the differences between embodiments of Fig. 2 and Fig. 3.

Fig. 3 comprises and engine 5, and electric motor 7, a PTO arrangement 3 and an hydraulic pump 9 being similar, or the same, as the corresponding components in Fig. 2. However, in Fig. 3, the electric motor 7 is not directly coupled to the PTO drive-wheel 30 by the motor output-shaft 70, but instead a motor gearing arrangement 74 is arranged between the electric motor 7 and the PTO arrangement 3. Hence, the motor output-shaft 70 is coupled to the PTO motor-shaft portion 72 via the motor gearing arrangement 74.

The motor gearing arrangement 74 provides gearing functionality and thus enables the user of an electric motor 7 run at relatively high rotational speed as compared to the engine 5.

Hence, the PTO motor-shaft portion 72 is not comprised in the motor output-shaft 70, but is instead part of a PTO motor-shaft 73 which is physically separated from the motor output-shaft 70. As seen in Fig. 3, the engine output-shaft 50 is arranged along a first axis C1, and the motor output shaft 70 is arranged along a second axis C2, wherein the first and second axis C1, C2 are parallel to each other.

According to one example embodiment, the PTO motor-shaft 73 may be directly coupled to the engine output-shaft 50, and may comprise the PTO engine-shaft portion 52. According to at least one example embodiment, the engine 5 is not directly coupled to the PTO drive-wheel 30 by the engine output-shaft 50, but instead an engine gearing arrangement (not shown) is arranged between the engine 5 and the PTO arrangement 3 in a corresponding manner as the motor gearing arrangement 74.

It should be noted that the parts described with reference to Fig. 2 and Fig. 3 may correspond to the corresponding parts of Fig. 1. Hence, the parts described with reference to Fig. 2 and Fig. 3 may be installed in working machine 1 described with reference to Fig. 1, and thus be configured to drive a hydraulic system 11 in order to power at least one hydraulic drive movable member therein.

The function of the working machine 1, and particularly the PTO arrangement 3 will now be further discussed with reference to Fig. 4 in combination with Fig. 1 and Fig. 2 (i.e. the reference numerals used when describing the different components in Fig. 1 and Fig. 2 will be used when referring to the corresponding components in the flow-chart of Fig. 4).

Fig. 4 is a flow-chart describing the steps for operating a hydraulic pump 9 in a working machine 1, such as excavator 1 described in Fig. 1. Thus, the working machine 1 comprises a power take-off arrangement 3, abbreviated as a PTO arrangement 3, an engine 5 and an electric motor 7. The output shafts of the engine 5 and the electric motor 7 (i.e. the engine output-shaft 50 and the motor output-shaft 70) are coupled to the PTO arrangement 3. The hydraulic pump 9 is configured to pressurize a hydraulic system 11 for powering at least one hydraulic driven movable member 20, 22, 24, 26, 28 of the working machine 1.

In a first step 401 the engine 5 and the electric motor 7 alternately drive a drive-wheel 30 in the PTO arrangement 3. Thus, for at least some mode of operations of the working machine 1, either the engine 5 or the electric motor 7 runs the drive-wheel 30 of the PTO arrangement 3. In an alternative example embodiment, or in at least some example mode of operation of the working machine 1, the engine 5 and the electric motor 7 commonly drive the drive-wheel 30 of the PTO arrangement 3.

In a second step 402, the hydraulic pump 9 is driven by the PTO arrangement 3. In other words, and depending on the mode of operation of the working machine 1, the engine 5 and/or the electric motor 7 drives the hydraulic pump 9 via the PTO arrangement 3.

As described with reference to Fig. 2, the PTO arrangement 3 may further comprises at least one drive-wheel bearing 32a, 32b arranged between a PTO motor-shaft portion 72 and the PTO drive-wheel 30 and/or arranged between a PTO engine-shaft portion 52 and the PTO drive-wheel 30. The engine output-shaft 50 is mechanically coupled to the PTO engine-shaft portion 52 which is arranged within the PTO drive-wheel 30, and the motor output-shaft 70 is mechanically coupled to the PTO motor-shaft portion 72 which is arranged within the PTO drive-wheel 30. Thus, the working machine 1 may be operated by driving the PTO drive-wheel as a free-wheel with regards to at least the PTO engine-shaft portion 52 or the PTO motor-shaft portion 72 being equipped with the drive-wheel bearing 32a, 32b. Thus, note that only one drive-wheel bearing 32a, 32b is enough to operate the PTO drive-wheel 30 as a free-wheel with regards to at least one of the engine 5 and the electric motor 7.

According to one example embodiment, the working machine 1 may be operated by a third step 403 of driving the PTO drive-wheel by the one of the PTO engine-shaft portion 52 and PTO motor-shaft portion 72 having the highest speed (e.g. the highest RPM). Thus, for such embodiments, a respective drive-wheel bearing 32a, 32b is arranged between the PTO engine-shaft portion 52 and the PTO drive-wheel 30 as well as between the PTO motor-shaft portion 72 and the PTO drive-wheel 30.

However, according to one example embodiment, or at least according to some example modes of operation of the working machine 1, the PTO drive-wheel 30 is not configured as a free-wheel (i.e. the drive-wheel bearings 32a, 32b are configured as free-wheel bearings, or they are omitted). In such examples, the engine 5 and the electric motor 7 commonly, or intermittently, or alternately, drive the drive-wheel 30 of the PTO arrangement 3.

According to one example embodiment, in a fourth step 404 the rotational speed of the engine 5 and/or the electric motor 7 is adapted to the requirements of the hydraulic system 11. That is, as the hydraulic driven movable members 20, 22, 24, 26, 28 may be driven intermittently and depending on need, the pressure of the fluid in the hydraulic system 11 may be allowed to vary in accordance with this need, and thus the hydraulic pump 9 may be operated in accordance with the requirements of the hydraulic system 11. Thus, by adapting the rotational speed of the engine 5 and/or the electric motor 7 to the requirements of the hydraulic system 11, the PTO arrangement 3 will transfer the required energy to the hydraulic pump 9, and thus the energy input to the working machine 1 is adapted to the operation of hydraulic driven movable members 20, 22, 24, 26, 28.

It is to be understood that the present invention is not limited to the embodiments described above and illustrated in the drawings; rather, the skilled person will recognize that many changes and modifications may be made within the scope of the appended claims.

## Claims

1. A working machine (1) comprising:
a power take-off arrangement (3);
an engine (5) and an electric motor (7);
a hydraulic pump (9);
a plurality of hydraulic driven movable members (20, 22, 24, 26, 28);
a hydraulic system (11) driven by said hydraulic pump, said hydraulic system being configured to power at least one of said hydraulic driven movable members;
**characterized in that**
said engine and said electric motor is coupled to said power take-off arrangement in order
to drive said hydraulic pump.

2. A working machine according to claim 1, wherein the PTO arrangement is at least partly arranged between the engine and the electric motor.

3. A working machine according to any one of claims 1-2, wherein said engine and said electric motor are coupled in parallel to said power take-off arrangement, and said power take of arrangement is coupled to, and thus driving, said hydraulic pump.

4. A working machine according to any one of the preceding claims, wherein said engine comprises an engine output-shaft (50) configured to transfer motion from said engine to said power take-off arrangement, and said electric motor comprises a motor output-shaft (70) configured to transfer motion from said electric motor to said power take-off arrangement, wherein said engine output-shaft is arranged along a first axis (C1), and said motor output-shaft is arranged along second axis (C2), and wherein said first and second axis (C1, C2) are parallel to each other.

5. A working machine according to any one of the preceding claims, wherein said power take-off arrangement comprises a PTO drive-wheel (30) configured to receive motion from said engine and/or said electric motor.

6. A working machine according to claims 4 and 5, wherein said power take-off arrangement comprises a PTO engine-shaft portion (52) configured to transfer motion from said engine to said PTO drive-wheel, and a drive-wheel bearing (32a) arranged between said PTO engine-shaft portion and said PTO drive-wheel, wherein said drive-wheel bearing enables said PTO-drive wheel to operate as a free wheel.

7. A working machine according to claim 6 or claims 4 and 5, wherein said drive-wheel bearing is a first drive-wheel bearing, and said power take-off arrangement comprises a PTO motor-shaft portion (72) configured to transfer motion form said electric motor to said PTO drive-wheel, and a second drive-wheel bearing (32b) arranged between said PTO motor-shaft portion and said PTO drive-wheel, wherein said second drive-wheel bearing enables said PTO drive-wheel to operate as a free wheel.

8. A working machine according to any one claims 5-7, wherein said power take-off arrangement comprises a PTO output-shaft (34) configured to transfer motion from said PTO drive-wheel to said hydraulic pump.

9. A working machine according to claim 8, wherein said power take-off arrangement comprises a PTO housing (36), housing said PTO drive-wheel, and said PTO output-shaft.

10. A working machine according to any one of the preceding claims, wherein said hydraulic drive movable member is chosen from the group of: a working machine propulsion means (20), a swing member (22), a boom (24), an arm (26), an equipment for handling objects (28).

11. An working machine according to any one of the preceding claims, wherein said working machine is an excavator (1).

12. A method for operating a hydraulic pump (9) in a working machine (1) comprising a power take-off arrangement (3), an engine (5) and an electric motor (7), wherein an engine output-shaft (50) and a motor output-shaft (70) are coupled to said power take-off arrangement, said hydraulic pump being configured to pressurize a hydraulic system (11) for powering at least one hydraulic driven movable member (20, 22, 24, 26, 28) of said working machine, **characterized by** the steps of:
driving said hydraulic pump by said power take-off arrangement;
operating said engine and said electric motor to alternately drive a PTO drive-wheel (30) in said power-take off arrangement.

13. A method according to claim 12, wherein the engine output-shaft is mechanically coupled to a PTO engine-shaft portion (52) arranged within said PTO drive-wheel, and the motor output-shaft is mechanically coupled to a PTO motor-shaft portion (72) arranged within said PTO drive-wheel, and wherein said power take-off arrangement further comprises first and second drive-wheel bearings (32a, 32b) arranged between said PTO engine-shaft portion and the PTO drive-wheel and arranged between said PTO motor-shaft portion and the PTO drive-wheel, respectively, **characterized by** the further step of:
driving the PTO drive-wheel by the one of the PTO engine-shaft portion and PTO motor-shaft portion having the highest speed.

14. A method according to any one of claims 11-13, **characterized by** the further step of:
adapting the rotational speed of the engine and/or the electric motor to the requirements of the hydraulic system.
